# EUROPÄISCHE PATENTSCHRIFT

(11) **EP 0 600 283 B1**
(45) Veröffentlichungstag und Bekanntmachung des Hinweises auf die Patenterteilung: **02.01.1997**
(21) Anmeldenummer: 93118350.3
(22) Anmeldetag: 12.11.1993
(51) Int. Cl.: B23P 19/00, B25B 23/04, E04D 15/04

(54) **Vorrichtung zum Einschrauben von Befestigungselementen**
Device for screwing on fastening elements
Dispositif pour visser des éléments de fixation

(30) Priorität: 03.12.1992 DE 4240607
(43) Veröffentlichungstag der Anmeldung: 08.06.1994
(73) Patentinhaber: HARDO- BEFESTIGUNGEN GMBH, D-59823 Arnsberg (DE)
(72) Erfinder: Kraft, Franz, Dipl.-Ing., D-59757 Arnsberg (DE); Kraft, Gottfried, Dipl.-Ing., D-59757 Arnsberg (DE)
(74) Vertreter: Fritz, Edmund Lothar, Dipl.-Chem.

(56) Entgegenhaltungen:
- EP-A- 0 003 004
- EP-A- 0 003 714
- EP-A- 0 292 604
- EP-A- 0 338 554
- WO-A-91/19061
- DE-A- 1 478 906

## Beschreibung

Die vorliegende Erfindung betrifft eine Vorrichtung zum Einschrauben von Befestigungselementen mit einer Zuführeinrichtung für die Befestigungselemente, mit einer absenkbaren Schraubeinheit und mit einer Haltevorrichtung für das Befestigungselement, die dieses vor dem Festschrauben zunächst festhält und anschließend freigibt.

Aus dem europäischen Patent EP 0 003 714 ist eine Vorrichtung der vorgenannten Art bekannt, die sich zum Einschrauben einteiliger Bohrschrauben eignet. Diese bekannte Vorrichtung eignet sich jedoch nicht für die Anbringung zweiteiliger Befestigungselemente, bestehend aus einem Halteteil mit Teller und einer Schraube, wie sie herkömmlicherweise für die Befestigung von Dämmplatten und Dachbahnen an einer Dachunterkonstruktion insbesondere bei Flachdächern verwendet werden. Zwar sind auch bereits Schraubautomaten für diese spezifischen Befestigungselemente bekannt, in die jedoch die aus Halteteil und Schraube vormontierten Befestigungselemente in der Regel einzeln eingelegt werden müssen, so daß diese Schraubautomaten keine ausreichend rationelle Anbringung dieser Befestigungselemente zulassen. Außerdem hat es sich als nachteilig erwiesen, daß die Schraube in der Hülsenbohrung des Halteteils nach der Vormontage in axialer Richtung beweglich und somit nicht gegen ein Herausfallen gesichert ist.

Die Aufgabe der vorliegenden Erfindung besteht somit darin, eine Vorrichtung der eingangs genannten Art zu schaffen, die sich zum Einschrauben der genannten zweiteiligen Befestigungselemente eignet, ein zügiges und rationelles Arbeiten ermöglicht und bei der gewährleistet ist, daß die Schraube bei der automatischen Verarbeitung der zweiteiligen Befestigungselemente nicht aus dem Halteteil herausfallen kann.

Die Lösung dieser Aufgabe liefert eine erfindungsgemäße Vorrichtung zum Einschrauben von Befestigungselementen der eingangs genannten Art mit den Merkmalen des Hauptanspruchs. Dadurch, daß die Befestigungselemente untereinander verbunden sind und eine Kette bilden, bei der der Teller des jeweils einen Halteteils die Hülsenbohrung des benachbarten Halteteils in der Kette abdeckt, kann die Schraube nicht aus dem Halteteil herausfallen. Die Kette der so miteinander verbundenen und vormontierten Befestigungselemente wird in ein Magazin der erfindungsgemäßen Vorrichtung eingelegt. Durch eine Vereinzelungsvorrichtung wird dann bei jedem Schraubvorgang das jeweils unterste Befestigungselement aus der Kette herausgetrennt und anschließend über die Zuführeinrichtung dem Schraubwerkzeug zugeführt.

Gemäß einer Weiterbildung der Erfindung umfaßt die Vereinzelungsvorrichtung einen unteren Sperrkeil, der die Kette der Befestigungselemente sperrt, wenn er unter den Schaft des untersten Befestigungselements geschoben wird, und einen Trennkeil, der bei jedem Schraubvorgang die Verbindung zwischen dem jeweils untersten Befestigungselement und der Kette der übrigen Befestigungselemente löst. Nach dem Lösen fällt dann dieses Befestigungselement über einen Abschnitt des Magazins in den Schraubkanal und kann verschraubt werden. Gemäß einer weiteren bevorzugten Ausbildung der Erfindung ist vorgesehen, daß die Vereinzelungsvorrichtung eine um eine horizontale Achse schwenkbar gelagerte Platte umfaßt, an der an einer Seite der Sperrkeil und etwas oberhalb von diesem und diesem gegenüberliegend der Trennkeil angebracht sind, wobei der Sperrkeil durch Schwenkbewegung der Platte wirksam wird und der Trennkeil bei der Rückschwenkbewegung der Platte im entgegengesetzten Drehsinn wirksam wird und bei der Rückschwenkbewegung gleichzeitig der Sperrkeil den Schaft des untersten Befestigungselements wieder freigibt. Vorzugsweise ist dabei an der schwenkbaren Platte ein Anschlaghebel angebracht und beim Absenken der Schraubeinheit nimmt ein oberer Anschlag den Anschlaghebel mit und schwenkt die Platte in ihrer ersten Schwenkrichtung, während beim anschließenden Anheben der Schraubeinheit ein unterer Anschlag den Anschlaghebel mitnimmt und die Platte im entgegengesetzten Drehsinn schwenkt. Dadurch wird erreicht, daß bei jedem Schraubvorgang wieder ein weiteres Befestigungselement aus der im Magazin befindlichen Kette abgetrennt wird und in den Schraubkanal gelangt, während die Kette mit den übrigen Befestigungselementen im Magazin verbleibt. Die Befestigungselemente können also nacheinander verschraubt werden, ohne den Arbeitsvorgang zu unterbrechen. Die Verknüpfung der Befestigungselemente zu einer Kette vereinfacht das Einlegen der Befestigungselemente in das Magazin. Vorzugsweise sorgen geeignete Führungseinrichtungen im Bereich der Vereinzelungsvorrichtung dafür, daß das aus der Kette zu trennende Befestigungselement beim Abtrennen nicht verrutscht.

Die Befestigungselemente selbst, die mittels der erfindungsgemäßen Vorrichtung eingeschraubt werden, sind Gegenstand einer weiteren Patentanmeldung der Anmelderin, auf deren Inhalt hiermit Bezug genommen wird.

Nachfolgend wird die vorliegende Erfindung anhand eines Ausführungsbeispiels unter Bezugnahme auf die beiliegenden Zeichnungen näher beschrieben. Dabei zeigen
- Fig. 1: eine Ansicht einer erfindungsgemäßen Vorrichtung;
- Fig. 2: eine Seitenansicht der Vorrichtung gemäß Fig. 1;
- Fig. 3: eine vergrößerte Detailansicht der Vereinzelungsvorrichtung;
- Fig. 3A: eine Ansicht der Vereinzelungsvorrichtung in einer anderen Arbeitsphase;
- Fig. 4: eine rückwärtige Ansicht der erfindungsgemäßen Vorrichtung;
- Fig. 5: einen Horizontalschnitt entang der Linie V-V von Fig. 4.

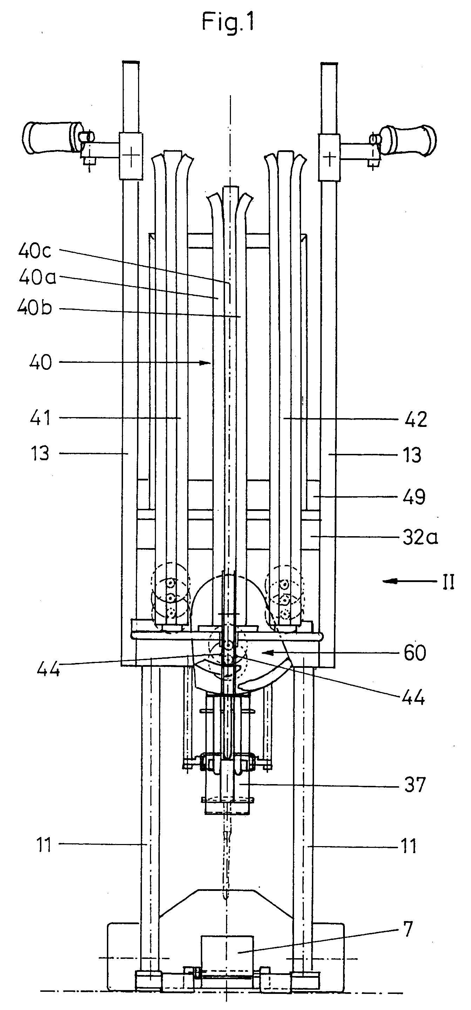

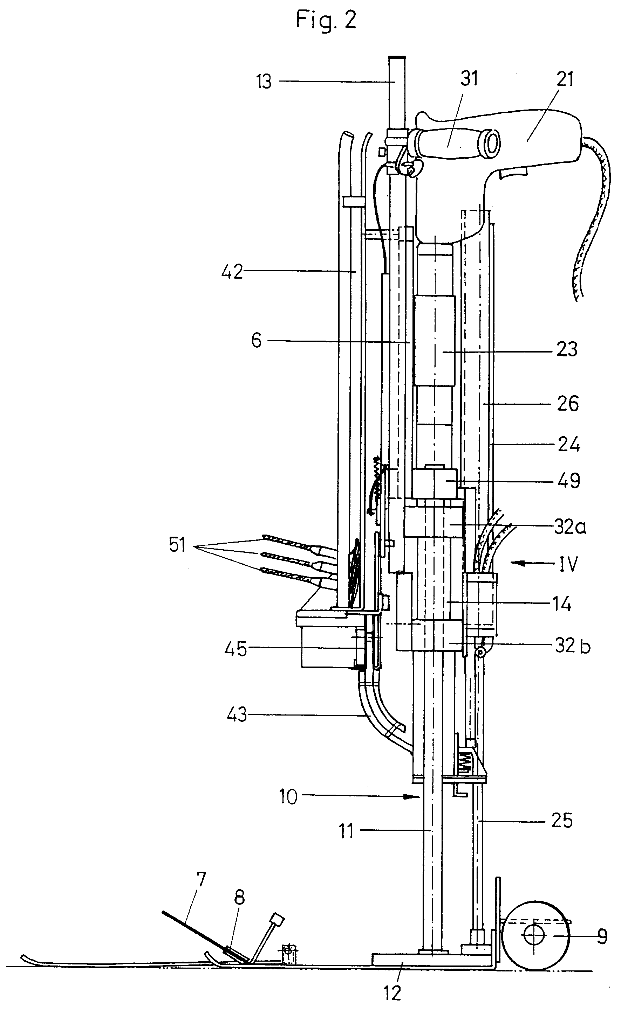

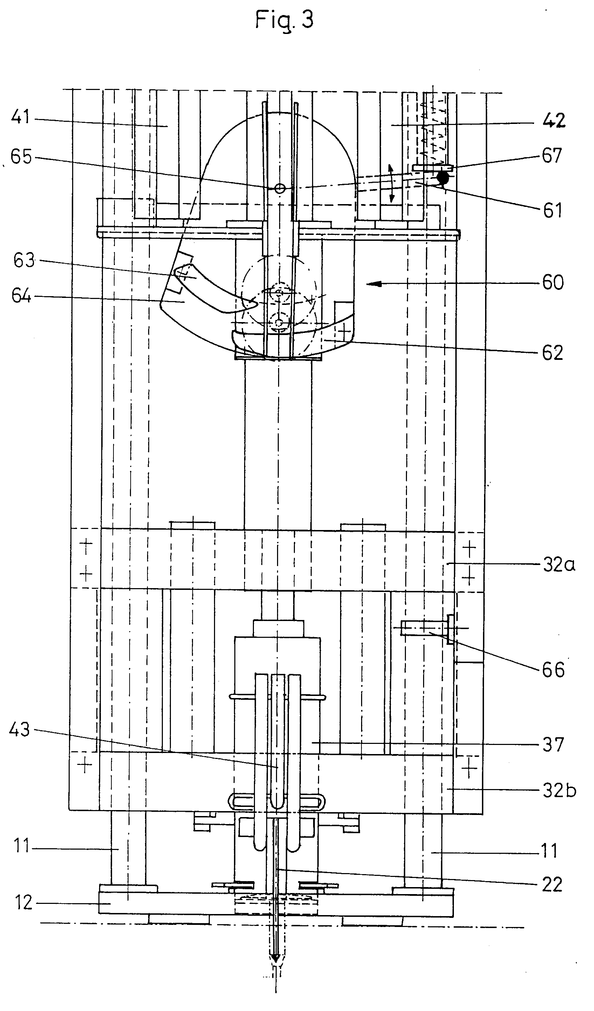

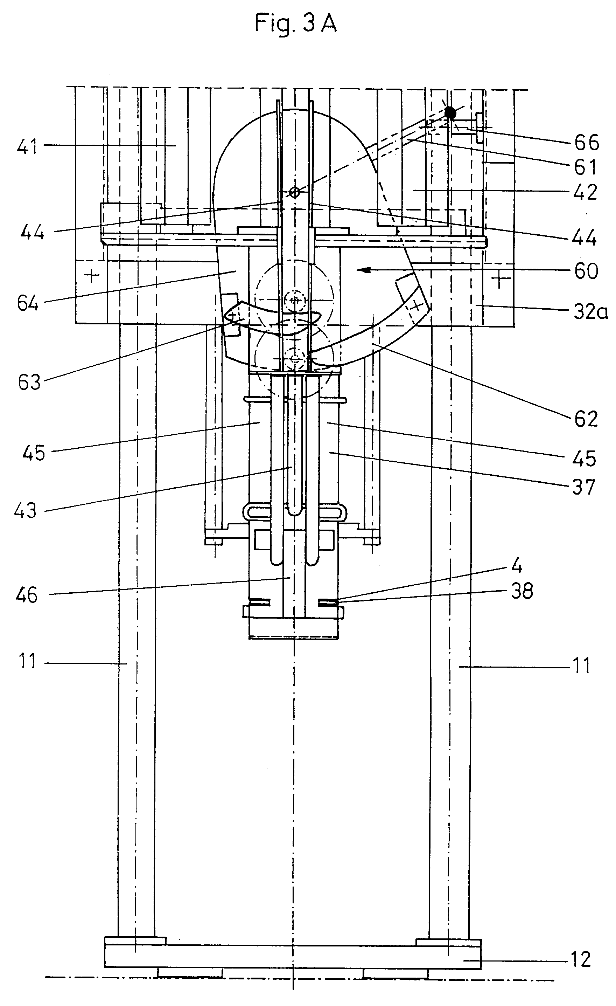

Es wird zunächst auf die Figuren 1 bis 5 Bezug genommen.

Der erfindungsgemäße Schraubautomat weist ein Gestell 10 auf mit zwei senkrechten Standrohren 11, die an ihrem unteren Ende auf einer Fußplatte 12 ruhen. Im Bereich der Fußplatte 12 sind Räder 9 anmontiert, so daß der Schraubautomat fahrbar ist. Außerdem kann in Höhe der Fußplatte 12 mit etwas Abstand von dieser an einer Halterung 8 ein Spiegel 7 angebracht sein, der in einem Winkel zur Horizontalen angeordnet ist und mittels dessen die Bedienungsperson den Schraubvorgang beobachten kann.

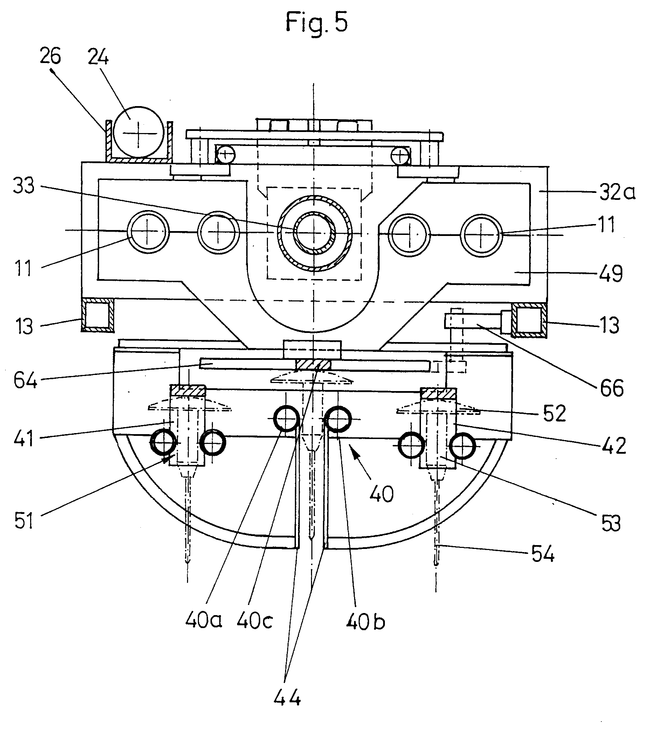

Auf den Standrohren 11 des Gestells ist die Schraubeinheit mit Schraubvorrichtung und Motor in vertikaler Richtung verschiebbar geführt. Diese vertikal verschiebbare Baueinheit weist zwei Führungsrohre 14 rechts und links auf, die bei der Absenkbewegung der Schraubeinheit auf den beiden Standrohren 11 des Gestells geführt sind. Fest mit dem Gestell verbunden ist eine Anschlagplatte 49, an der die beiden Führungsrohre 14 der absenkbaren Schraubeinheit in ihrer obersten Stellung anschlagen. Mit dieser Anschlagplatte 49 fest verbunden ist als weiterer fester Teil des Gestells ein oberer Gestellrahmen 6. Mit diesem oberen Gestellrahmen 6 wiederum fest verbunden sind drei Magazine, die die zu verschraubenden Befestigungselemente 51 aufnehmen und zwar ein mittleres Magazin 40 und zwei seitliche Magazine 41, 42. Die Befestigungselemente 51, die sich in dem mittleren Magazin befinden, werden sukzessive der Schraubeinheit zugeführt. Die beiden seitlichen Magazine nehmen weitere Befestigungselemente 51 auf, die anschließend in das mittlere Magazin 40 eingelegt werden können. Die Befestigungselemente 51 bilden in den Magazinen 40, 41, 42 eine vertikale Reihe und sind jeweils untereinander verkettet. Das mittlere Magazin 40 weist zwei seitliche rohrförmige Magazinführungen 40a, 40b auf, die den Schaft des Befestigungselements führen. Außerdem ist eine Führungsschiene 40c vorgesehen, an der der Teller 52 der Befestigungselemente 51 mit der Oberseite anliegt, so daß die Befestigungselemente durch diese Führungselemente des Magazins 40 so gehalten werden, daß der Schaft 53 des Tellers und die Schraube 54 jeweils seitlich vom Magazin 40 wegragen und im wesentlichen eine horizontale Position einnehmen (siehe Fig. 5). Das Magazin 40 setzt sich in seinem unteren Bereich in einem gekrümmten Abschnitt 43 fort, der etwa eine 90°-Krümmung aufweist und über den das als nächstes zu verschraubende Befestigungselement der Schraubeinheit zugeführt wird. Unmittelbar oberhalb dieses gekrümmten Abschnitts 43 des Magazins ist eine Vereinzelungsvorrichtung 60 angeordnet, die jeweils ein einzelnes Befestigungselement 51 aus der Kette abtrennt. Im Bereich der Vereinzelungsvorrichtung sind an den beiden Magazinführungen 40a, 40b zwei Führungsplatten 44 angebracht, die eine bessere seitliche Führung des Schafts 53 und der Schraube 54 der Befestigungselemente beim Trennen aus der Kette gewährleisten. Rechtwinklig zu diesen Führungsplatten 44 und in Verlängerung der Magazinführungen 40a, 40b sind Führungsbänder 45 angeordnet, die unmittelbar an der Unterseite des Tellers 52 des untersten Befestigungselements anliegen, das aus der Kette abgetrennt wird.

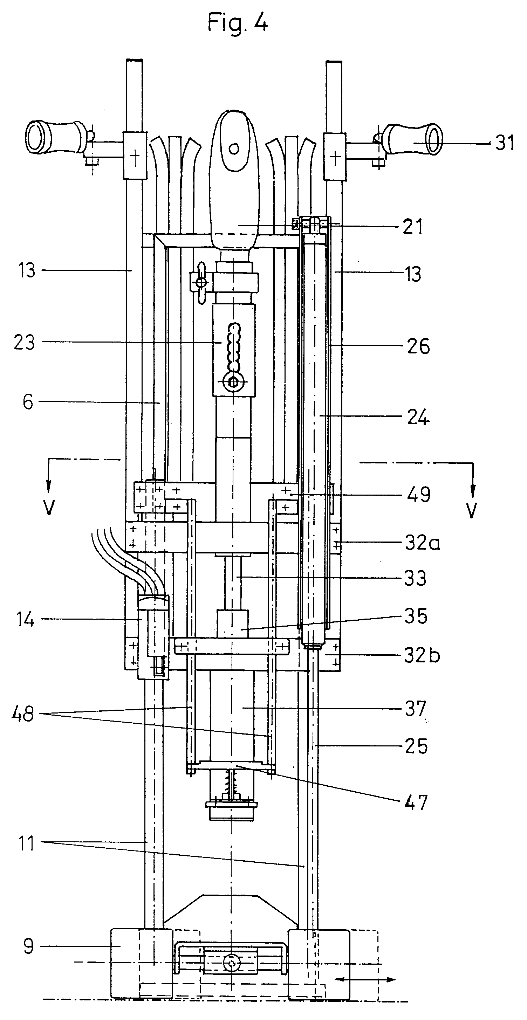

Nachfolgend wird die für den Schraubvorgang absenkbare Schraubeinheit des Schraubautomaten, die mit dieser verbundenen Teile und deren Funktion beschrieben. An zwei Rechteckrohren 13 der absenkbaren Schraubeinheit sind im oberen Bereich seitlich zwei Griffe 31 befestigt, so daß die Bedienungsperson durch Druck von oben her auf diese Griffe die Schraubeinheit absenken kann. Mit diesen Rechteckrohren 13 verbunden sind eine obere Führungsplatte 32a, die horizontal angeordnet ist und eine zu dieser parallele untere Führungsplatte 32b. Diese beiden Führungsplatten sind über vertikale Führungsrohre 14 miteinander verbunden (siehe Fig. 4). Diese Führungsrohre 14 sind bei der Absenkbewegung auf den Standrohren 11 axial verschiebbar geführt. An den beiden Führungsplatten 32a, 32b angebracht ist außerdem in vertikaler Anordnung eine Halterungsschiene 26, an der das obere Ende einer Gasdruckfeder 24 befestigt ist. Die Gasdruckfeder weist eine Kolbenstange 25 auf, die an ihrem unteren Ende auf der Fußplatte 12 des Gestells festgelegt ist. Beim Absenken der Schraubeinheit senkt sich die Gasdruckfeder 24 mit ab, wobei die an ihrem Ende festgelegte Kolbenstange 25 eingefahren wird. Somit erfolgt das Absenken der Schraubeinheit gegen die Kraft der Gasdruckfeder 24, während das Zurückführen der Schraubeinheit in die obere Ausgangsposition ohne Kraftaufwand durch die Gasdruckfeder 24 Praktisch selbsttätig erfolgt.

Die untere Führungsplatte 32b hat mittig eine rechteckige Ausnehmung 15 für den Aufnahmekörper 37. Dieser Aufnahmekörper weist in seinem unteren Abschnitt einen nach unten offenen rechteckigen Kanal 5 auf, der die anzubringenden Befestigungselemente 51 aufnimmt. Außen an diesem Aufnahmekörper 37 ist der untere gekrümmte Abschnitt 43 des Magazins angebracht, über den das unterste aus der Kette gelöste Befestigungselement 51 dem Kanal 5 des Aufnahmekörpers 37 zugeführt wird.

Die absenkbare Schraubeinheit ist Gegenstand einer weiteren Patentanmeldung der Anmelderin und wird daher in der vorliegenden Anmeldung nicht näher beschrieben.

Nachfolgend wird die Vereinzelungsvorrichtung 60 beschrieben, mittels derer das jeweils unterste Befestigungselement 51 im mittleren Magazin 40 entkettet wird. Die Vereinzelungsvorrichtung umfaßt eine schwenkbare Platte 64, die um eine horizontale Schwenkachse 65 an der Führungsschiene 40c des Magazins befestigt ist. Im unteren Bereich sind rechts und links jeweils etwas gekrümmte und zum vorderen Ende hin keilförmig zulaufende zangenartige Keile angebracht und zwar ein rechter unterer Sperrkeil 62 und ein linker etwas über dem Sperrkeil angebrachter Trennkeil 63. Mit der schwenkbaren Platte 64 ist ein Anschlaghebel 61 verbunden. Zunächst tritt der Sperrkeil 62 beim Absenken der Schraubeinheit in Aktion und zwar durch den mit einem der Rechteckrohre 13 verbundenen Anschlag 67, der beim Absenken der Rechteckrohre den Anschlaghebel 61 mitnimmt und dadurch die Platte 64 in der Zeichnung nach links schwenkt, wodurch der Sperrkeil 62 unter den Schaft des untersten Befestigungselements gelangt und die Kette sperrt. Wird dann die Schraubeinheit wieder nach oben bewegt, dann erreicht ein zweiter unterer Anschlag 66 den Anschlaghebel 61 und schwenkt die Platte 64 in der Zeichnung im Gegenuhrzeigersinn wieder nach rechts, wodurch der Trennkeil 63 zwischen den Schaft des untersten und des darüberliegenden Befestigungselements gelangt und das unterste Befestigungselement aus der Kette abtrennt. Gleichzeitig gibt der Sperrkeil 62 bei dieser Rückschwenkbewegung der Platte 64 den Schaft des untersten Befestigungselements 51 frei, so daß dieses in den gekrümmten Abschnitt 43 des Magazins und schließlich über eine rechteckige Öffnung in den nach unten offenen Kanal 5 des Aufnahmekörpers 37 gelangen kann. Dieser Vorgang wiederholt sich jeweils beim Anheben bzw. Absenken der Schraubeinheit, so daß jeweils ein Befestigungselement 51 aus der Kette abgetrennt wird, in den Kanal des Aufnahmekörpers 37 gelangt und anschließend verschraubt werden kann.

## Patentansprüche

1. Vorrichtung zum Einschrauben von Befestigungselementen mit einer Zuführeinrichtung für die Befestigungselemente, mit einer absenkbaren Schraubeinheit und mit einer Haltevorrichtung für das Befestigungselement, die dieses vor dem Festschrauben zunächst festhält und anschließend freigibt, dadurch gekennzeichnet, daß das Befestigungselement zweiteilig ist und ein Halteteil (51) umfaßt und eine vom Halteteil aufgenommene Schraube (54), daß die Befestigungselemente (51) untereinander verbunden sind und eine Kette bilden, daß die Vorrichtung ein Magazin aufweist, das die verketteten Befestigungselemente aufnimmt und eine Vereinzelungsvorrichtung (60) aufweist, mittels derer jeweils ein Befestigungselement (51) aus der Kette abgetrennt und einem Zuführkanal (5) der Schraubeinheit zugeführt wird.

2. Vorrichtung zum Einschrauben von Befestigungselementen nach Anspruch 1, dadurch gekennzeichnet, daß die Vereinzelungsvorrichtung (60) einen unteren Sperrkeil (62) umfaßt, der die Kette der Befestigungselemente sperrt, wenn er unter den Schaft des untersten Befestigungselements geschoben wird, und einen Trennkeil (63), der bei jedem Schraubvorgang die Verbindung zwischen dem jeweils untersten Befestigungselement (51) und der Kette der übrigen Befestigungselemente löst.

3. Vorrichtung zum Einschrauben von Befestigungselementen nach Anspruch 1 oder 2, dadurch gekennzeichnet, daß die Vereinzelungsvorrichtung eine um eine horizontale Achse schwenkbar gelagerte Platte (64) umfaßt, an der an einer Seite der Sperrkeil (62) und etwas oberhalb von diesem und diesem gegenüberliegend der Trennkeil (63) angebracht sind, wobei der Sperrkeil durch Schwenkbewegung der Platte (64) wirksam wird und der Trennkeil bei der Rückschwenkbewegung der Platte (64) im entgegengesetzten Drehsinn wirksam wird und bei der Rückschwenkbewegung gleichzeitig der Sperrkeil den Schaft des untersten Befestigungselements (51) wieder freigibt.

4. Vorrichtung zum Einschrauben von Befestigungselementen nach Anspruch 3, dadurch gekennzeichnet, daß an der schwenkbaren Platte (64) ein Anschlaghebel (61) angebracht ist, und beim Absenken der Schraubeinheit ein oberer Anschlag (67) den Anschlaghebel (61) mitnimmt und die Platte (64) in ihrer ersten Schwenkrichtung schwenkt und beim anschließenden Anheben der Schraubeinheit ein unterer Anschlag (66) den Anschlaghebel (61) mitnimmt und die Platte (64) im entgegengesetzten Drehsinn schwenkt.

5. Vorrichtung zum Einschrauben von Befestigungselementen nach einem der Ansprüche 1 bis 4, dadurch gekennzeichnet, daß im Bereich der Vereinzelungsvorrichtung (60) Führungsplatten (44) angebracht sind, die eine seitliche Führung der Schäfte (53) der Befestigungselemente gewährleisten.

6. Vorrichtung zum Einschrauben von Befestigungselementen nach einem der Ansprüche 1 bis 5, dadurch gekennzeichnet, daß im Bereich der Vereinzelungsvorrichtung (60) etwa rechtwinklig zu den Führungsplatten (44) angeordnete Führungsbänder (45) vorgesehen sind, die eine Anlageebene für die Unterseite des Tellers (52) des untersten Befestigungselements bilden.

## Claims

1. Device for screwing on fastening elements with a feed device for the fastening elements, with a screwing unit able to be lowered and with a holding device for the fastening element, which holds the fastening element before screwing on and then releases it, characterised in that the fastening element is made of two pieces and comprises a holding part (51) and a screw (54) accommodated in the holding part, that the fastening elements (51) are connected to each other and form a chain, that the device comprises a magazine which accommodates the linked up fastening elements and further a separating device (60) by means of which in each case one fastening element (51) is separated from the chain and fed to a feed channel (5) of the screwing unit.

2. Device for screwing on fastening elements as claimed in claim 1, characterised in that the separating device (60) comprises a lower stop key (62) which locks the chain of fastening elements when pushed beneath the shaft of the lowermost fastening element, and a separating key (63) which releases the connection between the lowermost fastening element (51) and the chain of fastening elements during each screwing operation.

3. Device for screwing on fastening elements as claimed in claim 1 or 2, characterised in that the separating device comprises a plate (64) which is mounted pivotally about a horizontal axis, at the one side the stop key (62) and somewhat above the latter and opposite thereto the separating key (63) being mounted, the stop key being rendered operative by a pivot movement of the plate (64) and the separating key by the reverse pivot movement of the plate in the contrary sense of rotation, and during this reverse pivot movement the stop key releases at the same time the shaft of the lowermost fastening element (51).

4. Device for screwing on fastening elements as claimed in claim 3, characterised in that a stop lever (61) is provided at the pivotable plate (64), said stop lever (61) being driven by an upper detent (67) when lowering the screwing unit and the plate (64) being pivoted in its first pivot direction, and at the subsequent lifting of the screwing unit a lower detent (66) is driving the stop lever (61) and the plate (64) is pivoted in the contrary sense of rotation.

5. Device for screwing on fastening elements as claimed in any one of claims 1 to 4, characterised in that in the region of the separating device (60) there are arranged guide plates (44) which ensure a lateral guidance of the shafts (53) of the fastening elements.

6. Device for screwing on fastening elements as claimed in any one of claims 1 to 5, characterised in that in the region of the separating device (60) there are arranged guide strips (45) approximately at right angles relative to the guide plates (44) which form a contact plane for the lower side of the disk (52) of the lowermost fastening element.

## Revendications

1. Dispositif pour visser des éléments de fixation avec un dispositif d'alimentation pour les éléments de fixation, avec une unité de vissage abaissable et avec un dispositif de saisie pour l'élément de fixation, qui d'abord saisit cet élément de fixation avant le vissage et qui le libère ensuite, caractérisé en ce que l'élément de fixation est en deux parties et comprend une pièce de saisie (51) et une vis (54) logée dans la pièce de saisie, en ce que les éléments de fixation (51) sont reliés les uns aux autres et forment une chaîne, en ce que le dispositif présente un magasin, recevant les éléments de fixation réunis en chaîne et présentant un dispositif d'individualisation (60), à l'aide duquel les éléments de fixation (51) sont un à un séparés de la chaîne et alimentés à un canal d'alimentation (5) de l'unité de vissage.

2. Dispositif pour visser des éléments de fixation suivant la revendication 1, caractérisé en ce que le dispositif d'individualisation (60) comporte un coin de blocage inférieur (62), qui bloque la chaîne des éléments de fixation lorsqu'il est glissé sous la tige de l'élément de fixation le plus bas, et un coin séparateur (63) qui lors de chaque opération de vissage défait la liaison entre l'élément de fixation (51) momentanément le plus bas et la chaîne des autres éléments de fixation.

3. Dispositif pour visser des éléments de fixation suivant la revendication 1 ou 2, caractérisé en ce que le dispositif d'individualisation comprend une plaque (64) montée à pivotement autour d'un axe horizontal, plaque sur laquelle est monté d'un côté le coin de blocage (62) et du côté opposé et à un niveau légèrement plus haut le coin séparateur (63), le coin de blocage entrant en fonction par un mouvement de pivotement de la plaque (64) et le coin séparateur entrant en fonction lors du pivotement de retour de la plaque (64) dans le sens de rotation opposé, tandis que pendant ce même pivotement de retour le coin de blocage libère la tige de l'élément de fixation (51) situé au niveau le plus bas.

4. Dispositif pour visser des éléments de fixation suivant la revendication 3, caractérisé en ce que sur la plaque pivotante (64) est fixé un levier de butée (61), et que lors de la course de descente de l'unité de vissage une butée supérieure (67) entraîne le levier de butée (61) et fait pivoter la plaque (64) suivant son premier sens de rotation, tandis que lors de la course de montée subséquente de l'unité de vissage, une butée inférieure (66) entraîne le levier de butée (61) et fait pivoter la plaque (64) dans le sens de rotation opposé.

5. Dispositif pour visser des éléments de fixation suivant l'une quelconque des revendications de 1 à 4, caractérisé en ce que dans la région du dispositif d'individualisation (60) sont prévues des plaques de guidage (44), qui assurent un guidage latéral des tiges (53) des éléments de fixation.

6. Dispositif pour visser des éléments de fixation suivant l'une quelconque des revendications de 1 à 5, caractérisée en ce que dans la région du dispositif d'individualisation (60) sont prévus des rubans de guidage (45) disposés sensiblement à angle droit par rapport aux plaques de guidage (44), rubans qui constituent un plan d'application pour la face inférieure du plateau (52) de l'élément de fixation le plus bas.
